(19) **Europäisches Patentamt**

**European Patent Office**

**Office européen des brevets**

(11) **EP 0 924 534 B1**

(12) **EUROPÄISCHE PATENTSCHRIFT**

(45) Veröffentlichungstag und Bekanntmachung des Hinweises auf die Patenterteilung:
**08.05.2002 Patentblatt 2002/19**

(51) Int Cl.[7]: **G01S 13/90**

(21) Anmeldenummer: **98123016.2**

(22) Anmeldetag: **04.12.1998**

(54) **Verfahren zur Verarbeitung von Spotlight SAR-Rohdaten**

Method for processing Spotlight SAR raw data

Methode pour élaborer des données brutes de radar à ouverture synthétique de type spotlight

(84) Benannte Vertragsstaaten:
**FR GB NL**

(30) Priorität: **22.12.1997 DE 19757309**

(43) Veröffentlichungstag der Anmeldung:
**23.06.1999 Patentblatt 1999/25**

(73) Patentinhaber: **Deutsches Zentrum für Luft- und Raumfahrt e.V.**
**53175 Bonn (DE)**

(72) Erfinder:
- **Mittermayer, Josef**
  **81249 München (DE)**
- **Moreira, Alberto, Dr.**
  **85748 Garching (DE)**

(74) Vertreter: **von Kirschbaum, Albrecht, Dipl.-Ing.**
**Patentanwalt**
**Postfach 1520**
**82102 Germering (DE)**

(56) Entgegenhaltungen:
**EP-A- 0 795 762          WO-A-97/43664**

- **MITTERMAYER J ET AL: "Spotlight SAR processing using the extended chirp scaling algorithm" IGARSS'97. 1997 INTERNATIONAL GEOSCIENCE AND REMOTE SENSING SYMPOSIUM. REMOTE SENSING - A SCIENTIFIC VISION FOR SUSTAINABLE DEVELOPMENT (CAT. NO.97CH36042), IGARSS'97. 1997 IEEE INTERNATIONAL GEOSCIENCE AND REMOTE SENSING SYMPOSIUM PROCEEDINGS. REMOT, 3. - 8. August 1997, Seiten 2021-2023 vol.4, XP002115618 1997, New York, NY, USA, IEEE, USA ISBN: 0-7803-3836-7**

**Beschreibung**

Die Erfindung bezieht sich auf ein Verfahren zur Verarbeitung von Spotlight SAR-Rohdaten.

Nachfolgend wird eine Einführung in SAR- und Spotlight- SAR-Systeme gegeben. Radar mit synthetischer Apertur SAR (**S**ynthetic **A**perture **R**adar) ist ein Instrument zur Fernerkundung, welches in immer größerem Maße Einsatz bei der Abbildung, Überwachung und Untersuchung der Erdoberfläche findet. Ein solches System weist einen sich mit konstanter Geschwindigkeit bewegenden Träger, eine orthogonal zur Bewegungsrichtung blickende Antenne und ein kohärentes Radarsystem auf, welches periodisch elektromagnetische Impulse sendet.

Die Bewegungsrichtung des Trägers wird als Azimutrichtung und die dazu orthogonale, schräg nach unten weisende Richtung wird als Entfernungsrichtung bezeichnet. Im normalen SAR-Betriebsmodus, der als Streifenmodus bezeichnet wird, wird während des Überflugs über ein zu beobachtendes Gebiet ein Streifen mit der Länge der überflogenen Strecke abgebildet. Die Streifenbreite hängt unter anderem von der Größe des Zeitfensters ab, in dem die auf einen gesendeten Impuls reflektierten Radarechos empfangen werden. Die empfangenen Echos werden in der Frequenz umgesetzt (gemischt), quadraturdemoduliert, digatalisiert und in einem zweidimensionalen Echospeicher abgelegt.

Jede SAR-Verarbeitung besteht im wesentlichen aus einer Entfernungskompression, einer Korrektur der Zielentfernungsänderung und einer Azimutkompression:

Die geometrische Auflösung in Entfernungsrichtung ist von der Bandbreite der gesendeten Radarimpulse abhängig ist. Um diese Auflösung zu verbessern, werden die gesendeten Impulse moduliert, wofür meist eine lineare Frequenzmodulation verwendet wird, welche im folgenden immer angenommen wird. Die Entfernungskompression bedeutet eine Filterung der empfangenen Signale in Entfernungsrichtung nach der Optimalfiltertheorie, wodurch die zeitlich ausgedehnten Signale zu Impulsen komprimiert werden.

Die Zielentfernungsänderung ist eine Folge der Variation der Entfernung zwischen Antenne und Punktziel bei der Bildung der synthetischen Apertur. Die Korrektur der Zielentfernungsänderung beschreibt die Entfernungsvariation der zu einem Punktziel gehörenden Echos im zweidimensionalen Echospeicher.

Die Impulskompression nach der Optimalfiltertheorie in Azimut entspricht der Bildung der synthetischen Apertur. Die Azimutmodulation ist ebenfalls eine Folge der Entfernungsänderung zwischen Antenne und Ziel beim Vorbeiflug des Trägers. Die Optimalfilterung bedeutet ein kohärentes Aufsummieren aller zu einer Azimutposition gehörenden Echos. Wird die Zielentfernungsänderung vor der Azimutkompression korrigiert, so kann die Azimutkompression durch eine eindimensionale Filterfunktion realisiert werden.

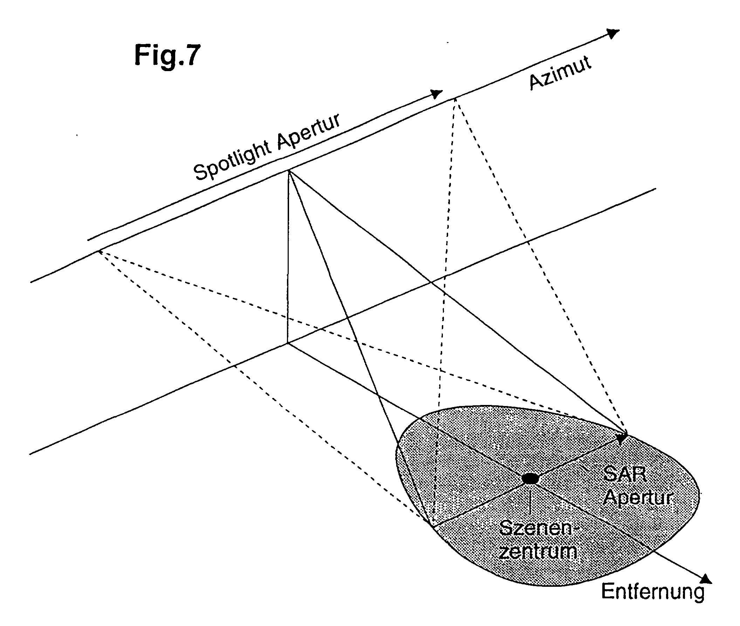

Spotlight-SAR ist eine Betriebsart von SAR-Systemen, die eine wesentlich höhere geometrische Auflösung ermöglicht. In Fig.7 ist die Abbildungsgeometrie eines Spotlight-SAR-Systems dargestellt. Im Spotlight-Modus wird die Antenne während des gesamten Vorbeiflugs auf das Zentrum der abgebildeten Szene gerichtet. Durch dieses Nachführen der Antenne wird die Szene viel länger beleuchtet, als dies im normalen Streifenmodus mit unbeweglicher Antenne der Fall wäre. Die längere Beleuchtungszeit ermöglicht die Bildung einer längeren synthetischen Apertur oder Spotlight-Apertur.

In Fig.7 ist die synthetische Apertur für den Streifenmodus (SAR-Apertur) im Szenenzentrum sowie die längere Spotlight-Apertur über der Azimutachse dargestellt. Die lange Spotlight-Apertur liefert Azimutsignale mit großer Bandbreite, welche eine hohe geometrische Auflösung in Azimutrichtung bedeuten. Im Spotlight-Modus wird wegen der Nachführung der Antenne eine in Azimutrichtung begrenzte Szene abgebildet, während im Streifenmodus eine Szene mit theoretisch unbegrenzter Azimutausdehnung abgebildet werden kann.

Um in Entfernungsrichtung eine ebenso hohe geometrische Auflösung wie in Azimutrichtung zu erhalten, wird ein linear frequenzmoduliertes Radarsignal mit sehr hoher Bandbreite ausgesendet. Um die Signalverarbeitung, insbesondere die Anforderungen an die Abtastung bei der A/D-Wandlung zu reduzieren, wird oft ein Ausgleich der Chirpmodulation beim Empfang eingesetzt. Dabei werden die empfangenen Echos vor der A/D-Wandlung mit einem linear frequenzmodulierten, um das Szenenzentrum zentrierten Signal mit der invertierten Modulationsrate des ausgesendeten Signals multipliziert. Daraus resultiert eine Überlagerung von sinusförmigen Signalen mit Frequenzen, welche linear von der Entfernungsdifferenz zwischen Punktziel und Zentrum abhängen.

Die Bandbreite dieses Signals ist wesentlich geringer als die Bandbreite der empfangenen Echos für den Fall einer geringen Ausdehnung der Szene in Entfernungsrichtung. Dies ist im Spotlight-Modus so gut wie immer gegeben.

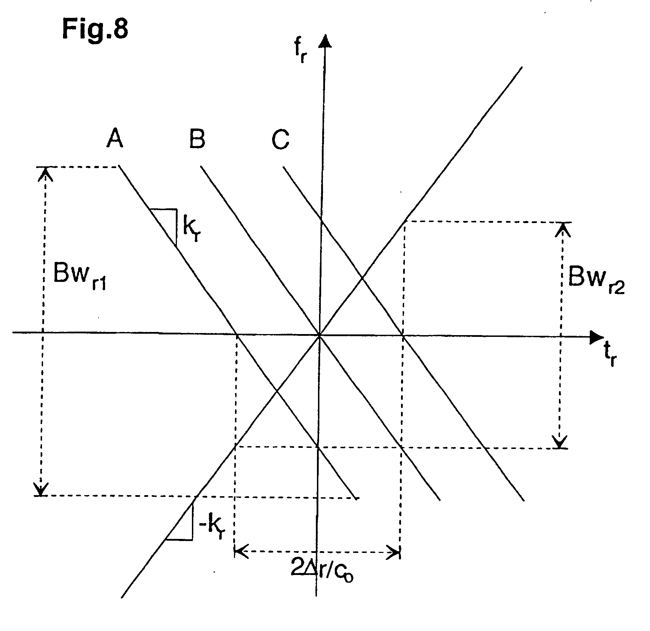

Der Ausgleich der Chirpmodulation beim Empfang ist in Fig.8 dargestellt. Hierbei ist auf der Abszisse die Entfernungszeit $t_r$ und auf der Ordinate die Entfernungsquenz $f_r$ aufgetragen. Die Signale von Zielen im Nahbereich (A), im Szenenzentrum (B) und im Fernbereich (C) besitzen die Modulationsrate $k_r$, während die Ausgleichsfunktion die Modulationsrate $-k_r$ besitzt. Die reduzierte Bandbreite $B_{wr2}$ nach dem Ausgleich der Chirpmodulation beim Empfang ist von der Entfernungsausdehnung der Szene $\Delta_r$ und der Bandbreite des ausgesendeten Signals $B_{wr1}$ abhängig. Die Lichtgeschwindigkeit ist mit $c_0$ bezeichnet.

Für die Spotlight-SAR-Verarbeitung kann das Polarformat-Verfahren, das Range Migration Verfahren oder ein angepaßtes Streifenmodus-Verfahren, wie beispielsweise das Chirp-Scaling-Verfahren verwendet werden. Die im vorliegenden Fallangewendete Azimut-Skalierung wurde in ähnlicher Form bereits zur ScanSAR-Verarbeitung eingesetzt. (Siehe deutsche Patentanmeldung 196 09 728.2-35). Auch aus US 5,546,084 ist ein SAR-System bekannt, das nach dem Spotlight-Prinzip arbeitet.

Das Polarformat-Verfahren (siehe Veröffentlichung von G. Carrara, R. S. Goodman und R. M. Majewski: "Spotlight Synthetic Aperture Radar", Artech House Boston, London 1995, S. 80 bis 115) arbeitet mit Ausgleich der Chirpmodulation beim Empfang, bei dem für das Szenenzentrum die Bewegungskompensation ebenfalls beim Empfang durchgeführt wird. Diese Bewegungskompensation erfolgt dabei beim Aufzeichnen der Rohdaten durch Verschieben des Empfangsfensters in Abhängigkeit von der Entfernungsvariation der Echos des Szenenzentrums.

Dieses Verfahren beginnt mit der Polarformat-Operation, welche eine Konvertierung der Rohdaten vom Polarformat ins kartesische Format darstellt. Diese Konvertierung erfolgt mit Hilfe einer zweidimensionalen Interpolation. Neben mehreren Korrekturschritten, welche auch die Korrektur der Zielentfernungsänderung für die gesamte Szene beinhalten, erfolgt die Kompression sowohl in Azimut- als auch in Entfernungsrichtung durch schnelle Fouriertransformation (**F**ast **F**ourier **T**ranformation FFT).

Das Range Migration Verfahren (siehe Veröffentlichung von C. Prati, A. M. Guarnieri und F. Rocca, "Spot Modus SAR Focusing with the $\omega$-k Technique", Proceedings of the 1991 IEEE International Geoscience and Remote Sensing Symposium (IGARSS), Espoo, Finland, 3-6 June 1991, S. 631 bis 634) leitet sich von Verfahren zur Verarbeitung von seismischen Daten ab. Der erste Verarbeitungsschritt ist eine eindimensionale Fouriertransformation in Azimut. Danach wird das Signal mit einer zweidimenionalen Phasenfunktion multipliziert, welche die Zielentfernungsänderung für alle Ziele bei der Entfernung des Szenenzentrums exakt korrigiert. Mit der sich anschließenden Stolt-Interpolation wird die Zielentfernungsänderung für die ganze Szene korrigiert. Eine zweidimensionale inverse Fouriertransformation liefert schließlich das fertig prozessierte Bild.

Im Prinzip kann jedes Verfahren zur Verarbeitung von SAR-Daten im Streifenmodus auch für den Spotlight-Modus eingesetzt werden. Ein Beispiel hierfür das Chirp-Scaling-Verfahren (siehe Veröffentlichung Raney R.K., Runge H., Bamler R., Cumming I. und Wong F.: "Precision SAR Processing Using Chirp Scaling", IEEE Transactions on Geoscience and Remote Sensing, Vol. 32, S. 786 bis 799, Juli 1994 und A. Moreira, J. Mittermayer und R. Scheiber, "Extended Chirp Scaling Algorithm for Air- and Spaceborne SAR Data Processing in Stripmap and ScanSAR Imaging Modes", IEEE Trans. On Geosci. and Remote Sensing, Vol.34, Nr. 5, Sept. 1996, S. 1123 bis 1136).

Das Chirp Scaling-Verfahren benötigt Rohdaten, welche in Entfernungsrichtung linear frequenzmoduliert sind. Der erste Verarbeitungsschritt ist eine Fouriertransformation in Azimut, an welche sich die Chirp-Scaling-Operation anschließt. Bei der Chirp-Scaling-Operation werden die Trajektorien, welche die Phasenzentren der zu Punktzielen gehörenden Entfernungssignale beschreiben, an den Verlauf einer Referenztrajektorie angeglichen. Somit kann nach einer Fouriertransformation in Entfernungsrichtung die Zielentfernungsänderung für alle Entfernungen gleichzeitig durch eine Verschiebung erfolgen. Die Entfernungskompression wird ebenfalls an dieser Stelle durch Optimalfilterung durchgeführt. Nach einer inversen Fouriertransformation in Entfernung erfolgt die Azimutkompression, an welcher sich die abschließende inverse Fouriertransformation in Entfernung anschließt.

Ein modiziertes Chirp-Scaling Verfahren zur Spotlight und SCAN-SAR Datenverarbeitung ist aus MITTERMAYER J ET AL: 'Spotlight SAR processing using the extended chirp scaling algorithm' IGARSS'97. 1997 INTERNATIONAL GEOSCIENCE AND REMOTE SENSING SYMPOSIUM. REMOTE SENSING - A SCIENTIFIC VISION FOR SUSTAINABLE DEVELOPMENT (CAT. NO.97CH36042), IGARSS'97. 1997 IEEE INTERNATIONAL GEOSCIENCE AND REMOTE SENSING SYMPOSIUM PROCEEDINGS. REMOT, 3. - 8. August 1997, Seiten 2021-2023 vol.4, XP002115618 1997, New York, NY, USA, IEEE, USA ISBN: 0-7803-3836-7 bekannt.

Nachteilig bei dem Polarformat-Verfahren ist, daß für die Transformation von Polarformat in kartesisches Forma aufwendige Interpolationen in Azimut und Entfernung benötigt werden.

Beim Range-Migraton-Verfahren sind folgende Punkte nachteilig:

Für die vollständige Korrektur der Zielentfernungsänderung ist die Stolt-Transformation notwendig, welche eine Interpolation darstellt.

Die augenblickliche Azimutbandbreite muß durch die Pulswiederholfrequenz (PRF) ausreichend abgetastet werden. Die gesamte Bandbreite in Azimut ist größer als die augenblickliche Azimutbandbreite, da durch das Nachführen der Antenne die Bandbreite entsprechend erhöht wird. Vor der Azimutkompression muß die Abtastfrequenz in Azimut erhöht werden, um die totale Bandbreite in Azimut eindeutig darstellen zu können.

Die Azimutreferenzfunktion muß eine der gesamten Azimutbandbreite entsprechende Länge aufweisen. Daraus ergibt sich eine benötigte Größe der Azimutdimension, welche gleich der Länge der Azimutreferenzfunktion plus der Azimutlänge der prozessierten Szene ist. Die große Ausdehnung der Azimutdimension erhöht den Rechenaufwand.

Das Chirp-Scaling-Verfahren weist darüber hinaus noch den Nachteil auf, daß in der Entfernung eine lineare Frequenzmodulation benötigt wird. Somit können keine Rohdaten mit Ausgleich der Chirpmodulation beim Empfang in direkter Weise verarbeitet werden. Dadurch wird die Datenmenge und die Abtastfrequenz in der Entfernung erhöht.

Der Erfindung liegt daher die Aufgabe zugrunde, bei einem Verfahren zur Verarbeitung von Spotlight SAR-Rohdaten diese Verarbeitung hochgenau, sehr effizient und ohne zahlreiche Interpolationen durchzuführen.

Gemäß der Erfindung ist dies bei einem Verfahren zur Verarbeitung von Spotlight SAR-Rohdaten durch die Schritte im kennzeichnenden Teil des Anspruchs 1 erreicht. Vorteilhafte Weiterbildungen sind Gegenstand der auf den Anspruch 1 unmittelbar oder mittelbar rückbezogenen Ansprüche.

Bei dem erfindungsgemäßen Verfahren wird eine Subapertur-Verarbeitung mit Frequenz-Skalierung für die Verarbeitung in der Entfernung sowie eine durch die Azimut-Skalierung verbesserten SPECAN-Methode für die Verarbeitung im Azimut durchgeführt. Bei diesem erfindungsgemäßen Verfahren können somit unmittelbar Rohdaten mit einem Ausgleich der Chirpmodulation beim Empfang verwendet werden, da die Korrektur der Zielentfernungsänderung durch eine Frequenz-Skalierung erfolgt, welche im Unterschied zu dem Chirp-Scaling-Verfahren Rohdaten ohne lineare Frequenzmodulation in der Entfernung verarbeiten kann. Während der Verarbeitung in der Entfernung erfolgt eine Aufteilung in Subaperturen, wodurch eine niedrigere Pulswiederholfrequenz (PRF) eingesetzt werden kann, da in Azimutrichtung das Abtast-Theorem nur innerhalb der Subaperturen erfüllt sein muß.

Gemäß der Erfindung wird die Azimutverarbeitung mit Hilfe des durch die Azimut-Skalierung verbesserten SPECAN-Verfahrens durchgeführt, wodurch eine lange Azimut-Referenzfunktion und somit eine große Azimutdimension während der Prozessierung verhindert ist. Durch das im SPECAN-Verfahren angewendete Deramping muß die Abtastung in Azimut vor der Azimutkompression nicht erhöht werden, da der Bandbreitebedarf in Azimut nach Deramping von der Azimutausdehnung der Szene bestimmt wird und Spotlight-Szenen in der Regel eine geringe Azimutausdehnung aufweisen. Derselbe Effekt wird in Entfernungsrichtung durch den Ausgleich der Chirpmodulation beim Empfang ausgenutzt. Bei dem erfindungsgemäßen Verfahren werden somit die Nachteile des SPECAN-Verfahrens durch die Azimut-Skalierung aufgehoben.

Am Ende einer Prozessierung befindet man sich zwar im Azimut-Frequenzbereich, jedoch ist nach der Azimut-Skalierung die Dopplerrate in allen Entfernungen die konstante Skalierungsdopplerrate. Da die Dopplerrate somit nicht mehr entfernungsabhängig ist, ist am Ende der Prozessierung in allen Entfernungen die gleiche geometrische Azimut-Skalierung vorhanden.

Durch die Azimut-Skalierung wird auch die hyperbolische Azimutmodulation berücksichtigt, so daß die Azimutverarbeitung für alle Entfernungen hoch genau ist und keine Neuabtastung mit Interpolation zur geometrischen Korrektur im Azimut notwendig ist. Darüber hinaus kann der gewünschte Abtastabstand im prozessierten Bild durch die Wahl der Skalierungs-Dopplerrate eingestellt werden.

Zur Frequenzskalierung von SAR-Rohdaten (Spotlight, Hybridmode) mit einer Demodulation beim Empfang wird durch Multiplikation mit zwei Referenzphasen im Entfernungszeit/Azimutfrequenzbereich und einer Phasenmodulation) im zweidimensionalen Frequenzbereich eine exakte Korrektur der Zielentfernungsänderung ohne Interpolation erreicht. Hierbei ist das Prinzip der Korrektur die Skalierung der Entfernungsfrequenz.

Durch das erfindungsgemäße Verfahren sind somit insgesamt folgende Vorteile erreicht:

Durch die Frequenz-Skalierung können Rohdaten mit einem Ausgleich der Chirpmodulation beim Empfang verwendet werden.

Durch das Verwenden der Frequenz-Skalierung ist zur Korrektur der Zielentfernungsänderung keine Interpolation erforderlich. Durch die Subapertur-Verarbeitung kann eine niedrigere Pulswiederholfrequenz (PRF) angewendet werden. Während der Azimutverarbeitung kann aufgrund der SPECAN-Methode die Abtastfrequenz gering gehalten werden.

Die Subapertur-Verarbeitung ermöglicht darüber hinaus die Verwendung von kurzen schnellen Fouriertransformationen (FFTs), was wiederum zu einer deutlichen Verringerung des Rechenaufwands führt. Durch die SPECAN-Methode kann in der Prozessierung die Größe der Azimutdimension verringert werden; eine hochgenaue Verarbeitung im Azimut ist trotz der Anwendung der SPECAN-Methode durch die Azimut-Skalierung gewährleistet.

Die richtige Skalierung des Zeitbereichs in Azimutrichtung kann durch die Wahl der Skalierungs-Dopplerrate bei der Azimutskalierung eingestellt werden. Die beim SPECAN-Verfahren benötigte Neuabtastung mit Interpolation in Azimutrichtung kann entfallen. Die gesamte Verarbeitung erfolgt nur unter Verwendung von Multiplikatoren und Fouriertransformationen, wobei sämtliche Interpolationen vermieden sind. Dadurch ist insgesamt eine hochgenaue, phasentreue Prozessierung erreicht.

Nachfolgend wird die Erfindung anhand von bevorzugten Ausführungsformen unter Bezugnahme auf die anliegenden Zeichnungen im einzelnen erläutert. Es zeigen:

Fig.1            in Form eines Diagramms einen bevorzugten Ablauf des erfindungsgemäßen Verfahrens;

Fig.2            eine schematisierte Bildung der Subaperturen;

Fig.3-1 bis 3-7      eine schematisierte Wiedergabe einer Frequenzskalierungsoperation;

Fig.4      das Ergebnis einer Prozessierung eines Punktzieles;

Fig.5      das Ergebnis einer Prozessierung von neun Punktzielen;

Fig.6a bis c      eine Korrektur der Zielentfernungsänderung durch eine Frequenz-Skalierung für Ziele im Fernbereich, bei Referenzentferung und für Ziele im Nahbereich;

Fig.7      eine schematische Wiedergabe der Spotlight-Geometrie, und

Fig.8      eine schematisierte Darstellung eines Ausgleichs einer Chirpmodulation beim Empfang.

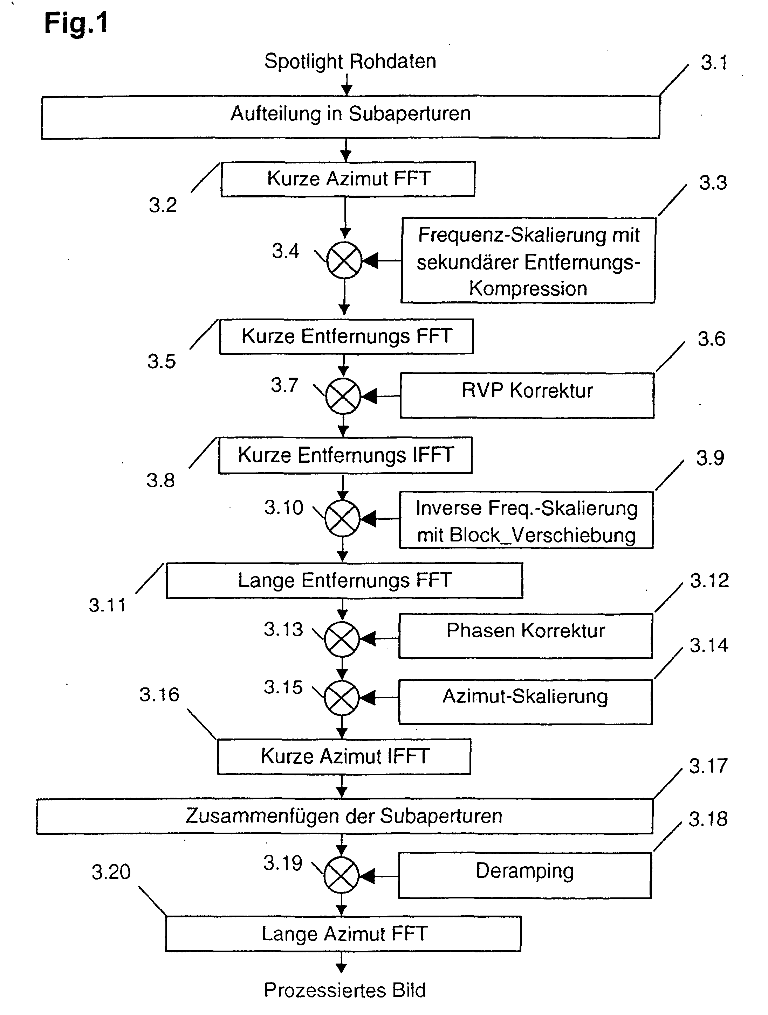

In Fig.1 ist ein Ausführungsbeispiel des erfindungsgemäßen Verfahrens wiedergegeben. Hierbei kann das Spotlight-SAR-Signal eines Punktziels nach Ausgleich der Chirp-Modulation beim Empfang der aus der nachstehenden Gl.(1) entnehmbaren Weise beschrieben werden:

$$s(t_a, t_r; r_o) = C \exp\left[ -j \cdot \frac{4 \cdot \pi}{c_o} \cdot k_r \cdot \left( r(t_a; r_o) - r_{ref} \right) \cdot \left( t_r - \frac{2 \cdot r_{ref}}{c_o} \right) \right] \exp\left[ j \cdot \frac{4 \cdot \pi}{c_o^2} \cdot k_r \cdot \left( r(t_a; r_o) - r_{ref} \right)^2 \right]$$
$$\cdot \exp\left[ -j \frac{4 \cdot \pi}{\lambda} \cdot r(t_a; r_o) \right] \tag{1}$$

Hierbei ist mit $t_a$ die Azimutzeit, mit $t_r$ die Entfernungszeit, mit $r_0$ der kürzeste Abstand zwischen Antenne und einem Punktziel, mit C eine komplexe Konstante, mit $c_0$ die Lichtgeschwindigkeit, mit $k_r$ die Modulationsrate in der Entfernung, mit $r(t_a; r_0)$ die Entfernungsvariation, mit $r_{ref}$ der Abstand zwischen Antenne und dem Szenenzentrum und mit $\lambda$ die Wellenlänge bezeichnet.

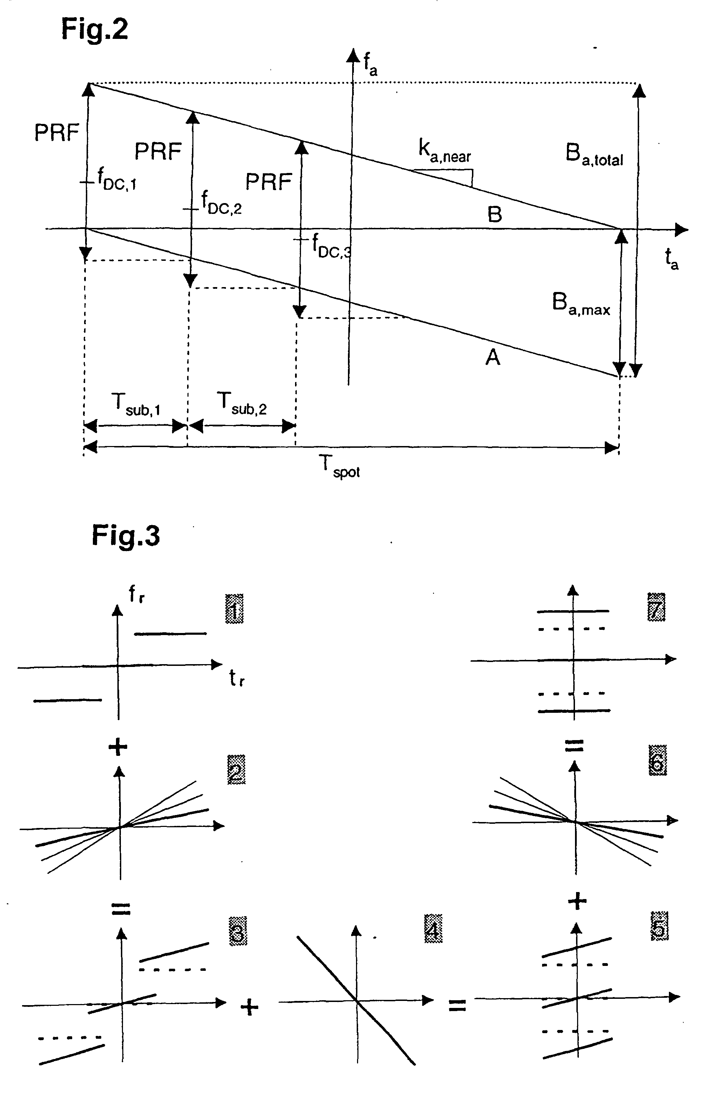

Die Spotlight-Rohdaten werden zuerst beim Schritt 3.1 in Subaperturen aufgeteilt. Diese Aufteilung wird nachfolgend anhand von Fig.2 erklärt, in welcher auf der Abszisse die Azimutzeit $t_a$ und auf der Ordinate die Azimutfrequenz $f_a$ aufgetragen sind. Die Azimutsignale A und B mit einer Dopplerrate $k_{a,near}$ stammen von Punktzielen, welche die abgebildete Szene in Azimut begrenzen und im Nahbereich liegen. In Fig.2 ist eine symmetrische Seitensichtgeometrie angenommen worden. Die Szenenausdehnung im Azimut entspricht willkürlich der Länge der Spotlight-Apertur.

Während der Verarbeitung in Entfernung muß eine Azimutbandbreite $B_a$ eines Punktziels ausreichend abgetastet werden. Wegen der über der Entfernung variierenden Dopplerrate bei konstanter Abtastzeit $T_{spot}$ weisen Ziele im Nahbereich eine höhere Azimutbreite auf. Die maximale augenblickliche Bandbreite $B_{a,max}$ ist daher das Produkt aus Spotlight-Apertur $T_{spot}$ und Dopplerrate $k_{a,near}$ im Nahbereich.

$$B_{a,max} = T_{Spot} \cdot k_{a,near} \tag{2}$$

Die gesamte Azimutbandbreite $B_{a,total}$ der Szene ist höher als die maximale augenblickliche Bandbreite $B_{a,max}$, da die Azimutpositionierung eines Ziels einen Frequenzoffset verursacht. Daher berechnet sich die gesamte Azimutbandbreite $B_{a,total}$ der Szene in Abhängigkeit von der Szenenausdehnung $\Delta a$ im Azimut aus Gl.(3), in welcher mit V die Geschwindigkeit bezeichnet ist.

$$B_{a,total} = B_{a,max} + \frac{\Delta a}{V} \cdot k_{a,near} \tag{3}$$

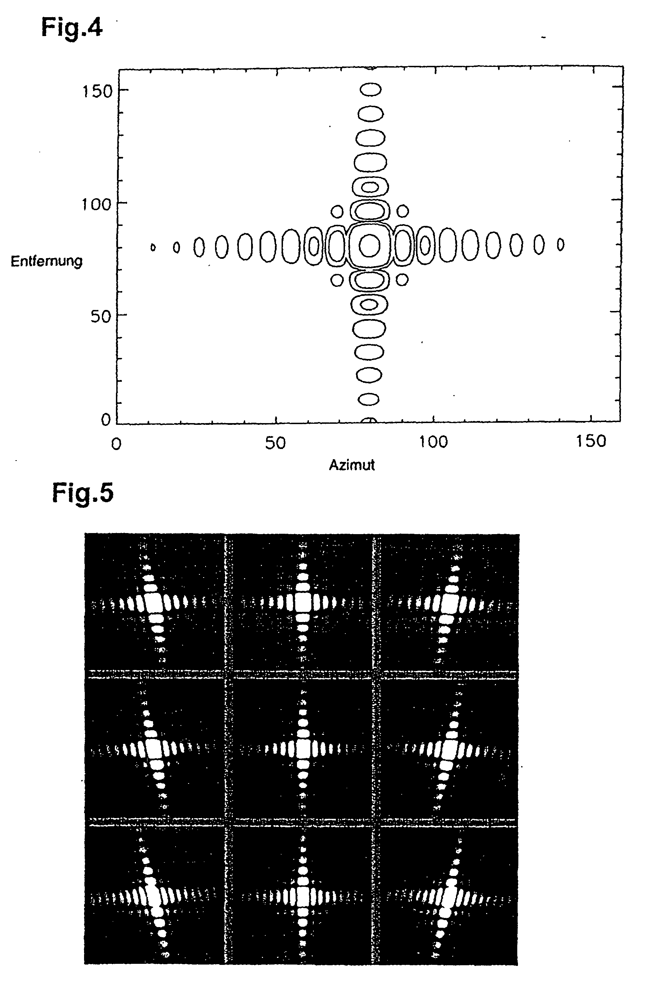

Bei Verwendung des unveränderten Chirp-Scaling-Verfahrens müßte die Pulswiederholfrequenz PRF mindestens so groß sein wie die gesamte Azimutbandbreite $B_{a,total}$, um mehrdeutige Azimutfrequenzen während der Korrektur der Entfernungsvariation zu verhindern. Mehrdeutige Azimutfrequenzen resultieren in einer falschen Korrektur. Durch Anwendung der Subapertur-Verarbeitung ist eine niedrigere Pulswiederholfrequenz (PRF) ausreichend. Aus Fig.4 geht die Berechnung einer Subaperturzeit $T_{sub}$ gemäß Gl.(4) unmittelbar hervor.

$$T_{sub} \leq \frac{PRF - B_{a,max}}{k_{a,near}} \tag{4}$$

Nach der Aufteilung in Subaperturen (Schritt 3.1) wird die Prozessierung für jede Subapertur i mit einem eigenen Doppler-Zentroiden $f_{DC,i}$ weitergeführt. Um eine Verschlechterung des Prozessierungsergebnisses aufgrund der Subapertur-Verarbeitung zu verhindern, werden die Subaperturen mit geringer Überlappung gebildet. Dies ist durch das $\leq$-Zeichen in Gl.(4) ausgedrückt.

Nachstehend wird unter "kurze Azimut-FFT bzw. -IFFT" die durch Anwendung einer Subapertur-Verarbeitung kurze Länge oder kleine Punktzahl von FFT/IFFT-Operationen in Azimutrichtung verstanden. Nach dem Zusammenfügen der Subaperturen (wie nachstehend in Verbindung mit Schritt 3.17 behandelt) ist die volle Länge des Zeitsignals wieder hergestellt und die abschließende FFT-Operation muß daher eine "lange Azimut-FFT" sein.

Bei einer "langen Azimut-FFT" werden die sinusförmigen Zeitsignale im Azimut-Zeitbereich zu kurzen Impulsen im Azimutfrequenzbereich komprimiert. Daher muß eine "lange Azimut-FFT" auch genügend Punkte aufweisen, um eine für die Auflösung in Azimut ausreichend hohe Abtastung des Azimutsignals im Azimutfrequenzbereich sicherzustellen.

Unter "kurze Entfernungs-FFT bzw. -IFFT und lange Entfernungs-FFT" wird folgendes verstanden: Die Länge einer "kurzen Entfernungs-FFT" ist durch die Punktanzahl der Rohdaten in Entfernungsrichtung definiert. Eine "lange Entfernungs-FFT" muß genügend Punkte aufweisen, um eine für die Auflösung in Entfernung ausreichend höhe Abtastung des Entfernungssignals im Entfernungsfrequenzbereich sicherzustellen. Die Ausdrücke "kurze Entfernungs-FFT bzw. -IFFT" und "lange Entfernungs-FFT" beziehen sich daher auf eine durch die letzte "lange Entfernungs-FFT" durchgeführte, abschließende Kompression der sinusförmigen Signale im Entfernungszeitbereich zu kurzen Impulsen im Entfernungsfrequenzbereich.

Beim nächsten Verarbeitungsschritt (Schritt 3.2) wird die Transformation in den Entfernungs-Dopplerbereich für kurze FFTs im Azimut vorgenommen. Die wegen des Ausgleichs der Chirpmodulation beim Empfang nun entfernungskomprimierten Signale werden zur Korrektur der Entfernungsvariationen beim Schritt 3.2 mit der in der nachstehenden Gl.(5) wiedergegebenen Frequenz-Skalierungs-Funktion $H_f$ (3.3) in einem Multiplizierglied 3.4 multipliziert.

$$H_f(f_a, t_r; r_o) = \exp\left[j \cdot 2\pi \cdot k_r \cdot \beta(f_a) \cdot t_r^2\right] \cdot \exp\left[j \cdot 2\pi \cdot \frac{\beta^2 - 1}{c_o^2 \cdot \beta^3} \cdot r_o \cdot \lambda \cdot k_r^2 \cdot \left(t_r - \frac{2 \cdot r_{ref}}{c_o}\right)^2\right] \tag{5}$$

$$W(f_a, t_r) = \sqrt{\left(1 + \frac{k_r \cdot \lambda}{c_o} \cdot \left(t_r - \frac{2 \cdot r_{ref}}{c_o}\right)\right)^2 - \frac{f_a^2 \cdot \lambda^2}{4 \cdot V^2}} \tag{6}$$

$$\beta(f_a) = \sqrt{1 - \left(\frac{f_a \lambda}{2 V}\right)^2} \tag{7}$$

Die Frequenz-Skalierungsfunktion $H_f(f_a, t_r; r_o)$ enthält im zweiten Exponentialterm den für eine sekundäre Entfernungskompression notwendigen Ausdruck; dadurch wird die sekundäre Entfernungskompression ebenfalls in diesem Verarbeitungsschritt durchgeführt.

Durch eine sekundäre Entfernungskompression wird ein durch die Verkopplung von Azimut- und Entfernungssignalen entstehender Phasenterm korrigiert. Die Verkopplung ist eine Folge der Zielentfernungsänderung zwischen Antenne und einem beleuchteten Punktziel beim Vorbeiflug des Trägers. Der zweite Exponentialausdruck in der Frequenz-Skalierungsfunktion in Gl.(5) stellt die Korrekturfunktion für eine sekundäre Entfernungskompression dar. Dagegen wird eine erste Entfernungskompression durch die letzte "lange Entfernungs-FFT" durchgeführt, welche die abschließende Kompression der sinusförmigen Signale im Entfernungszeitbereich zu kurzen Impulsen im Entfernungsfrequenzbereich durchführt.

Für die Implementierung des Verfahrens ist es nötig, die Entfernung $r_o$ im zweiten Exponentialausdruck für die sekundäre Entfernungskompression durch die Entfernung $r_{ref}$ anzunähern. Aufgrund der geringen Ausdehnung einer Spotlight-Szene in Entfernung entsteht durch diese Näherung keine meßbare Verschlechterung des Prozessierungsergebnisses. Die Genauigkeit der sekundären Entfernungskompression kann aber noch weiter gesteigert werden, indem zusätzliche Terme höherer Ordnung als zwei bei der Taylor-Approximation des Wurzelausdrucks $W(f_a,t_r)$, welcher in Gl.6 angegeben ist, im Azimutfrequenz/Entfernungsbereich berücksichtigt werden.

Beim Schritt 3.5 werden die Daten durch kurze Entfernungs-FFTs in den zweidimensionalen Frequenzbereich transformiert. Dort wird die Korrektur der Residual Video Phase (RVP) in einer weiteren Multipliziereinheit (Schritt 3.7) mit der RVP-Korrekturfunktion (Schritt 3.6) aus Gl.(8) durchgeführt. Die RV-Phase entsteht während des Ausgleichs der Chirpmodulation beim Empfang und entspricht einer entfernungsabhängigen Zeitverschiebung in der Entfernung.

$$H_{RVP}(f_r) = exp\left[-j \cdot \pi \cdot \frac{f_r^2}{\beta \cdot k_r}\right] \quad (8)$$

Nach der RVP-Korrektur erfolgt durch kurze Entfernungs-IFFTs (inverse Fastfourier-Transformationen) beim Schritt 3.8 eine-Rücktransformation in den Entfernungs-Doppler-Bereich. Dort wird in einer Multipliziereinheit 3.10 mit Hilfe einer in Gl.(9) angeführten, inversen Frequenz-Skalierungsfunktion eine kleine lineare Frequenzmodulation entfernt, welche durch die Frequenz-Skalierungsoperation eingefügt wurde.

$$H_{tt}(f_a, t_r) = exp\left[\pi \cdot k_r \cdot (\beta^2 - \beta) \cdot t_r^2\right] \cdot exp\left[j \cdot \frac{4 \cdot \pi \cdot k_r}{c_o} \cdot r_{ref} \cdot (1 - \beta) \cdot t_r\right] \quad (9)$$

Der erste Exponentialterm in Gl.(9) dient zum Entfernen dieser kleinen Frequenzmodulation. Mit dem zweiten Exponentialterm wird eine azimutfrequenzabhängige, aber entfernungsunabhängige Verschiebung der Entfernungsfrequenzen durchgeführt. (Blockverschiebung) Durch diese Verschiebung wird die Zielentfernungsänderung vollständig korrigiert. Die Zielentfernungsänderung wurde bei der Frequenz-Skalierung angeglichen, d.h. die Entfernungsabhängigkeit der Zielentfernungsänderung wurde bei der Frequenz-Skalierung beseitigt.

Die beim Schritt 3.11 erfolgten langen FFTs in Entfernung müssen mit einer für die Entfernungsauflösung $\rho_r$ ausreichenden Punktzahl $N_{FFT,r}$ (siehe nachfolgende Gl.(10)) durchgeführt werden. Die Entfernungssignale sind im Frequenzbereich komprimiert. Daher muß der Abtastabstand im Entfernungs-Frequenzbereich $\Delta f_r$ mindestens der Entfernungsauflösung entsprechen. In Gl.(10) ist mit $S_f$ die Abtastfrequenz bezeichnet.

$$\Delta f_r = \frac{2 \cdot \rho_r \cdot kr}{c_o}; \quad N_{FFT,r} = \frac{S_f}{\Delta f_r} \quad (10)$$

Die Erweiterung auf die Punktzahl $N_{FFT,r}$ erfolgt durch Einfügen von Nullen vor der Transformation. Als nächstes erfolgt beim Schritt 3.12 die Korrektur einer entfernungsabhängigen Azimutphase durch eine Multiplikation in der Multipliziereinheit 3.13 mit der Korrekturfunktion $H_{kor}$ aus Gleichung (11). Die Azimutphase entsteht während der entfernungsunabhängigen Verschiebung der Entfernungsfrequenzen in Gl.(9).

$$H_{korr}(f_a, f_r) = exp\left[-j \cdot \frac{4 \cdot \pi \cdot k_r}{c_o} \cdot \frac{2 \cdot r_{ref}}{c_o} \cdot (1 - \beta) \cdot \left(r_{ref} - \frac{f_r \cdot c_o}{2 \cdot k_r}\right)\right] \quad (11)$$

Danach wird mit der Azimut-Skalierungsfunktion aus Gl.(12) beim Schritt 3.14 die Azimut-Skalierung in einer weiteren Multipliziereinheit 3.15 multipliziert. Bei der Azimut-Skalierung wird der mit der Entfernung variierende, hyperbolische Phasenverlauf der Azimutsignale in den rein quadratischen, durch die Skalierungs-Dopplerrate $k_{a,scl}$ beschriebenen Phasenverlauf transferiert.

$$H_a(f_a, f_r) = \exp\left[j\frac{4 \cdot \pi}{\lambda} \cdot \left(r_{ref} - \frac{f_r \cdot c_o}{2 \cdot k_r}\right) \cdot (\beta - 1)\right] \cdot \exp\left[j \cdot \frac{\pi}{k_{a,scl}} \cdot f_a^2\right] \quad (12)$$

Anschließend werden beim Schritt 3.16 die Signale durch kurze IFFTs in den Azimut-Zeit/Entfernungs-Frequenzbereich transformiert. In diesem Bereich findet das Zusammenfügen der einzelnen Subaperturen beim Schritt 3.17 statt. Danach steht für jedes Punktziel wieder die für die hohe Azimutauflösung benötigte Bandbreite $B_a$ zur Verfügung.

Als nächstes erfolgt das Deramping im Azimut, indem beim Schritt 3.18 die Azimutsignale mit der Derampingfunktion in einer Multipliziereinheit 3.19 multipliziert werden. Die Derampingfunktion ist ein linear frequenzmoduliertes Signal mit der invertierten, bei der Azimut-Skalierung eingefügten, Skalierungs-Dopplerrate $k_{a,scl}$.

$$H_{der}(t_a) = \exp[j \cdot \pi \cdot k_{a,scl} \cdot t_a^2] \quad (13)$$

Die Länge $N_{FFT,a}$ der die Prozessierung abschließenden langen Azimut-FFTs ergibt sich nach Gl.(14) in Abhängigkeit von der Azimutauflösung $\rho_a$ und der Skalierungs-Dopplerrate $k_{a,scl}$ beim Schritt 3.20.

$$\Delta f_a = \frac{\rho_a \cdot k_{a,scl}}{V} \; ; \; N_{FFT,a} = \frac{PRF}{\Delta f_a} \quad (14)$$

In Fig.3 ist die Frequenzskalierungsoperation ausführlich dargestellt. Hierbei sind jeweils auf den Abszissen die Entfernungszeit $t_r$ und auf den Ordinaten die Entfernungsfrequenz $f_r$ aufgetragen. Der Plot 1 (Fig.3-1) zeigt die Signale in Entfernungsrichtung von drei Punktzielen nach dem Ausgleich der Chirpmodulation beim Empfang. Die Ziele befinden sich an derselben Azimutposition, aber in den Entfernungen Nahbereich, Szenenzentrum und Fernbereich. Die Referenzentfernung für die Frequenz-Skalierung ist diejenige, die auch für den Ausgleich der Chirpmodulation beim Empfang verwendet wurde. Die zeitliche Verschiebung der Signale entspricht der RV-Phase.

Nach dem Ausgleich der Chirpmodulation beim Empfang besteht neben dem linearen Zusammenhang zwischen Entfernung $r_0$ und der, für eine Entfernung konstanten Entfernungsfrequenz $f_r$ zusätzlich eine Abhängigkeit der Entfernungsfrequenz $f_r$ von der Azimutfrequenz $f_a$. Die Abhängigkeit von der Azimutfrequenz ist eine Folge der Entfernungsvariation und wird durch den ersten Exponentialausdruck in Gl.(5) eliminiert.

In Plot 2 (Fig.3-2) ist die Frequenz-Skalierungsfunktion als lineare Frequenzmodulation dargestellt. Die Abhängigkeit von der Azimutfrequenz ist im Plot 2 (Fig.3-2) durch mehrere Skalierungsfunktionen angedeutet. Für die Signale in Plot 1 (Fig.3-1), welche sich bei derselben Azimutposition befinden, wird nur eine Skalierungsfunktion angewendet. Dies kann zum Beispiel die fett wiedergegebene Skalierungsfunktion sein.

Das Ergebnis der Frequenz-Skalierung ist in Plot 3 (Fig.3-3) gezeigt. Die Signale vor der Operation sind gestrichelt, die Signale nach der Operation durchgezogen wiedergegeben. Die Mittenfrequenzen der Signale sind abhängig von Entfernung und Azimutfrequenz skaliert worden. Die Mittenfrequenz des Ziels im Nahbereich ist nach unten, die Mittenfrequenz des Ziels im Fernbereich ist nach oben verschoben. Die Mittenfrequenz des Ziels bei der Referenzentfernung ist unverändert. Die Frequenz-Skalierung verursacht außerdem eine kleine, unerwünschte lineare Frequenzmodulation der Signale, welche später wieder entfernt wird.

Als nächstes wird die RV-Phase entfernt. Diese Operation kann als Skalierung in Abhängigkeit von der Entfernungsfrequenz aufgefaßt werden. Plot 4 (Fig.3-4) zeigt eine solche Skalierungsfunktion. Das Ergebnis in Plot 5 (Fig. 3-5) zeigt jetzt alle Signale bei der gleichen Entfernungszeit. Durch Multiplikation mit der inversen Frequenz-Skalierungs-Funktion in Plot 6 (Fig.3-6), welche auch den Term zur entfernungsunabhängigen Verschiebung der Entfernungsfrequenzen enthält, wird die oben genannte, unerwünschte lineare Frequenzmodulation entfernt und die Zielentfernungsänderung vollständig korrigiert. Plot 7 (Fig.3-7) zeigt schließlich das Ergebnis von Frequenz-Skalierung, Entfernung der RV-Phase und inverser Frequenz-Skalierung. Die konstante Frequenz des Signals im Nahbereich wurde verringert, die konstante Frequenz des Signals im Fernbereich wurde erhöht und die konstante Frequenz Null des Signals bei der Referenzentfernung wurde nicht geändert. Wegen der Abhängigkeit der Frequenz-Skalierung von der Azimutfrequenz wurde damit die Entfernungsvariation korrigiert.

In Fig.4 ist das Ergebnis der Prozessierung eines simulierten Punktziels mit dem erfindungsgemäßen Verfahren gezeigt. Da während der Prozessierung keine Gewichtungsfunktionen verwendet wurden, zeigt die Höhenliniendarstellung in Fig.4 eine zweidimensionale sinc-Funktion.

Das Ergebnis der Prozessierung von neun Punktzielen mit unterschiedlichen Entfernungs- und Azimutpositionen ist in Fig. 5 in Grauwertdarstellung gezeigt. Die Ziele sind so angeordnet, daß die Ziele in den Eckpositionen eine Szene mit den Ausdehnungen 750 x 1000m in Azimut und Entfernung begrenzen. Die Referenzentfernung des Szenenzentrums betrug 4000m. Die Prozessierungen wurden ohne Gewichtung der Referenzfunktionen durchgeführt. Die grauen Streifen zwischen den einzelnen Impulsantworten deuten an, daß die Ziele weiter voneinander entfernt sind, als in Fig.5 dargestellt. Die Ergebnisse waren für alle Punktziele zweidimensionale sinc-förmige Impulsantworten. Die Abweichung der ersten drei Nebenzipfel von der idealen Impulsantwort war kleiner als 0,1 dB. Die mit den Simulationsparametern theoretisch möglichen geometrischen Auflösungen liegen bei ca. 0,3m x 0,7m in Azimut und Entfernung. Die Abweichung der Auflösung vom theoretischen Wert betrug maximal 2,1%.

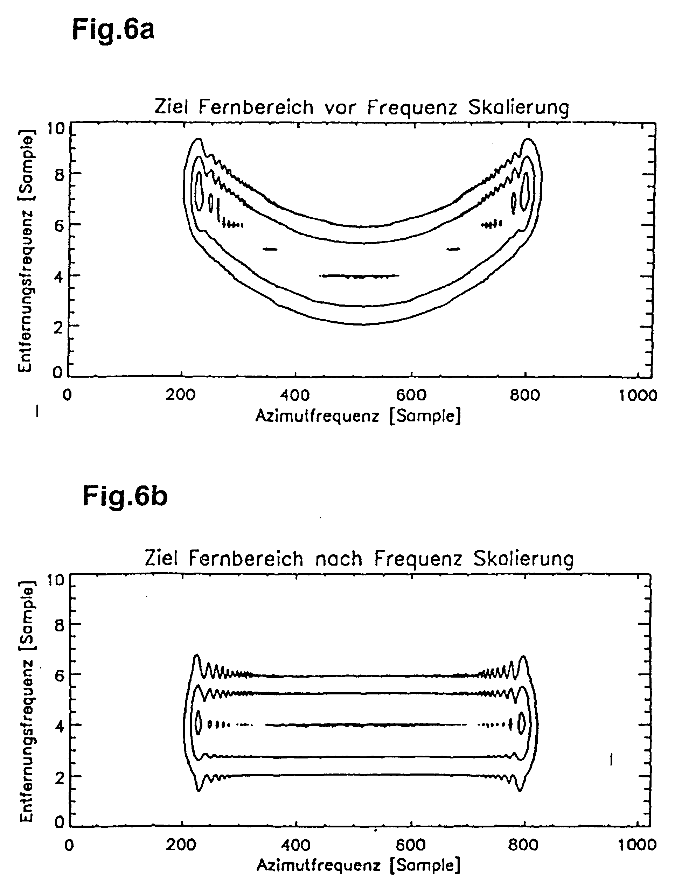

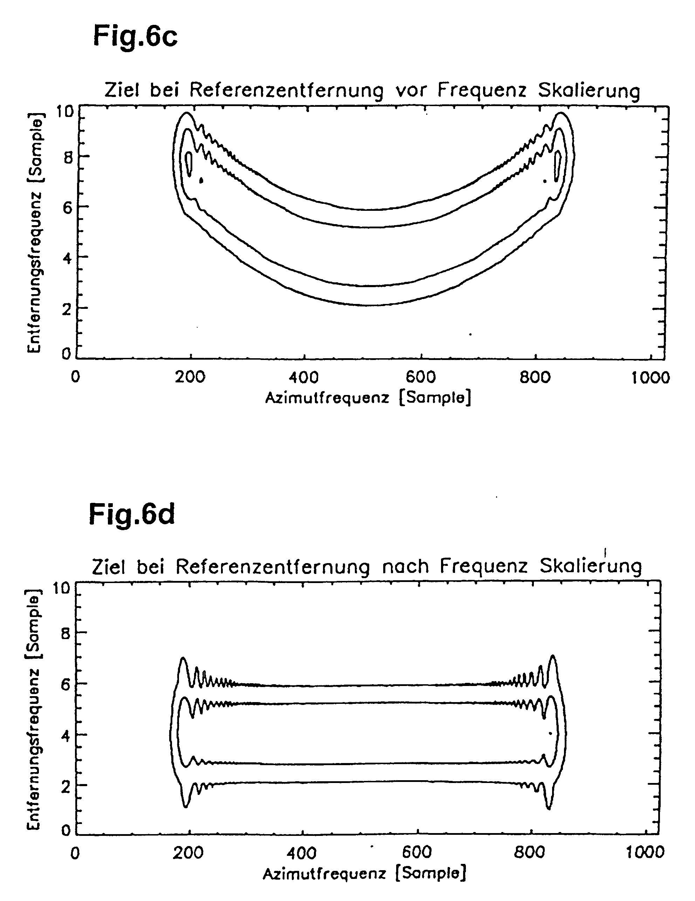

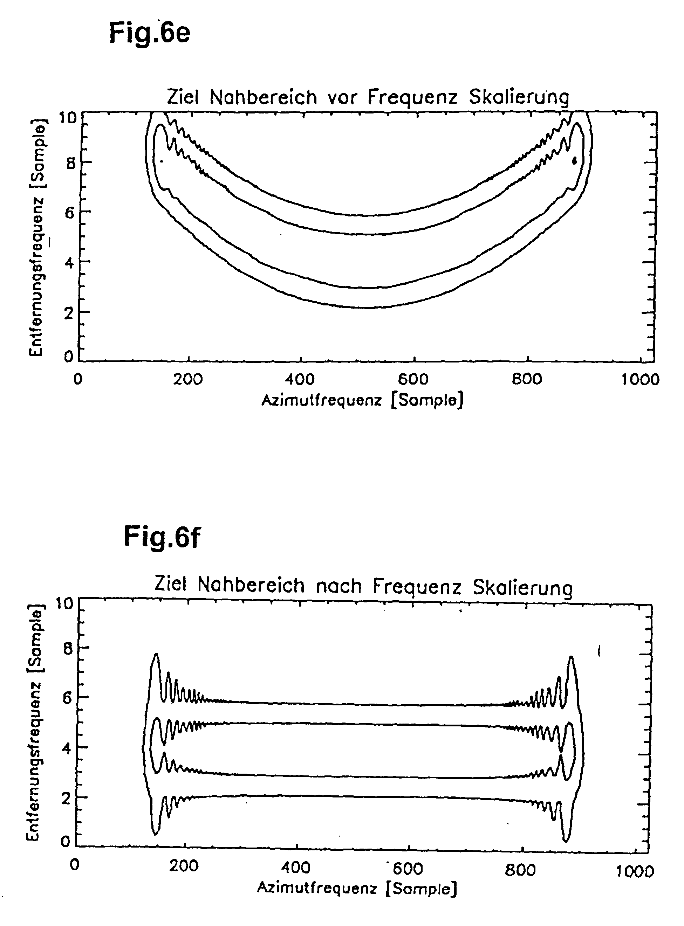

In Fig.6a bis 6c sind Signale von je einem Ziel bei den Entfernungen Fernbereich, Referenzentfernung und Nahbereich im zweidimensionalen Frequenzbereich als Höhenliniendarstellung gezeigt, wobei auf den Abszissen Azimutfrequenz [Sample] und auf den Ordinaten Entfernungsfrequenz [Sample] eingetragen sind. Hierbei sind in Fig.6a, 6c und 6e Plots von Signalen vor der Frequenz-Skalierung wiedergegeben, während Fig.6b, 6d und 6f Plots von Signalen nach der Frequenz-Skalierung zeigen, bei denen die Zielentfernungsänderung korrigiert ist.

Das erfindungsgemäße Verfahren kann auch für Rohdaten ohne Ausgleich der Chirpmodulation beim Empfang verwendet werden. Dazu wird die Frequenz-Skalierungsoperation durch die herkömmliche Chirp-Scaling-Operation ersetzt, aber der Ausgleich der Chirpmodulation wird anstatt beim Empfang in der Signalverarbeitung als erster Verarbeitungsschritt durchgeführt.

Das Verfahren kann ferner auch zur Verarbeitung von Spotlight-Daten verwendet werden, welche mit Hilfe eines Kurvenfluges aufgezeichnet wurden. Bei einem Kurvenflug ist die Antennenposition fest, wird also nicht nachgeführt. Für die Prozessierung mit dem erfindungsgemäßen Verfahren wird dann die durch den Kurvenflug entstehende, zusätzliche Zielentfernungsänderung durch eine zusätzliche Verschiebung der Daten während der Frequenz-Skalierung korrigiert.

Das erfindungsgemäße Verfahren kann auch zur Verarbeitung von Daten im Hybrid-Modus verwendet werden. In diesem Modus wird die Antenne langsamer als im Spotlight-Modus nachgeführt. Er stellt daher eine Mischform von Stripmap-Modus und Spotlight-Modus dar. In diesem Modus liegt sowohl der Wert für die geometrische Auflösung als auch die Ausdehnung der Szene in Azimut zwischen den Werten des Stripmap-Modus und des Spotlight-Modus.

Das Verfahren kann auch zur Prozessing von Stripmap-Mode SAR-Rohdaten verwendet werden, wenn der Ausgleich der Chirpmodulation bei Empfang in der Prozessing durchgeführt wird.

**Patentansprüche**

1. Verfahren zur zweidimensionalen Verarbeitung von Spotlight SAR-Daten in exakte Bilddaten, **gekennzeichnet durch** folgende Schritte, daß

   a) die Spotlight SAR-Rohdaten in Azimut-Subaperturen aufgeteilt (3.1) und
   b) **durch** kurze Azimut-FFT's in den Entfernungszeit/Azimutfrequenzbereich transformiert werden (3.2); .
   c) die erhaltenen Daten mit einer Frequenz-Skalierungsfunktion (3.3)

$$H_f(f_a,t_r;r_o) = \exp\left[j \cdot 2\pi \cdot k_r \quad \cdot \beta(f_a) \cdot t_r^2\right] \cdot \exp\left[j \cdot 2\pi \cdot \frac{\beta^2 - 1}{c_o^2 \cdot \beta^3} \cdot r_o \cdot \lambda \cdot k_r^2 \cdot \left(t_r - \frac{2 \cdot r_{ref}}{c_o}\right)^2\right] \quad (5)$$

$$\beta(f_a) = \sqrt{1 - \left(\frac{f_a \lambda}{2\,V}\right)^2}$$

   welche eine sekundäre Entfernungskompression einschließt, multipliziert werden (3.4),
   d) **durch** kurze Entfernungs-FFT's in den zweidimensionalen Frequenzbereich transformiert werden (3.5),
   e) mit einer Residual-Video-Phasen-Korrekturfunktion

$$H_{RVP}(f_r) = \exp\left[-j \cdot \pi \cdot \frac{f_r^2}{\beta \cdot k_r}\right] \quad (8)$$

multipliziert werden (3.7) und anschließend

f) **durch** kurze Entfernungs-IFFT's zurück in den Entfernungszeit/Azimutfrequenzbereich transformiert werden (3.8);

g) die **dadurch** gebildeten Daten mit der inversen Frequenz-Skalierungsfunktion (3.9)

$$H_{tf}(f_a, t_r) = \exp\left[\pi \cdot k_r \cdot (\beta^2 - \beta) \cdot t_r^2\right] \cdot \exp\left[j \cdot \frac{4 \cdot \pi \cdot k_r}{c_o} \cdot r_{ref} \cdot (1 - \beta) \cdot t_r\right] \quad (9)$$

welche eine Block-Verschiebung einschließt, multipliziert werden

h) danach mittels langer Entfernungs-FFT's wieder in den zweidimensionalen Frequenzbereich transformiert (3.11) und

i) mit der Phasenkorrekturfunktion

$$H_{korr}(f_a, f_r) = \exp\left[-j \cdot \frac{4 \cdot \pi \cdot k_r}{c_o} \cdot \frac{2 \cdot r_{ref}}{c_o} \cdot (1 - \beta) \cdot \left(r_{ref} - \frac{f_r \cdot c_o}{2 \cdot k_r}\right)\right] \quad (11)$$

multipliziert (3.13) werden;

j) anschließend mit der Azimut-Skalierungsfunktion

$$H_a(f_a, f_r) = \exp\left[j \frac{4 \cdot \pi}{\lambda} \cdot \left(r_{ref} - \frac{f_r \cdot c_o}{2 \cdot k_r}\right) \cdot (\beta - 1)\right] \cdot \exp\left[j \cdot \frac{\pi}{k_{a,scl}} \cdot f_a^2\right] \quad (12)$$

multipliziert (3.15) und anschließend **durch** kurze Azimut-FFT's wieder zurück in den Entfernungsfrequenz/Azimutzeitbereich transformiert (3.16) werden;

l) anschließend die Azimut-Subaperturen wieder zusammengefügt (3.17) werden und mit einer Deramping-Funktion

$$H_{der}(t_a) = \exp[j \cdot \pi \cdot k_{a,scl} \cdot t_a^2]$$

multipliziert (3.19) und

m) anschließend **durch** lange Azimut-FFT's in den zweidimensionalen Frequenzbereich transformiert (3.20) werden,

wobei mit $f_a$ die Azimutfrequenz, mit $t_r$ die Entfernungszeit, mit $r_o$ die kürzeste Entfernung zu einem Ziel, mit $k_r$ die Modulätionsrate der ausgesendeten Impulse in Entfernung, mit $r_{ref}$ die Referenzentfernung, mit $f_r$ die Entfernungsfrequenz, mit $c_o$ die Lichtgeschwindigkeit, mit $\lambda$ die Wellenlänge, mit $V$ die Geschwindigkeit, mit $t_a$ die Zeit in Azimutrichtung, mit $f_r$ die Entfernungsfrequenz und mit $k_{a,scl}$ die Skalierungs-Dopplerrate bezeichnet sind.

2. Verwenden eines Verfahrens nach Anspruch 1 zur zweidimensionalen Verarbeitung von SONAR- und seismischen Rohdaten mit Spotlight und im Hybridmode.

**Claims**

1. A method of processing two-dimensional spotlight SAR raw data into exact image data, **characterized by** steps as follows:

   a) dividing the spotlight SAR raw data into azimuth subaperture data (3.1), and
   b) transforming these data, via short azimuth FFTs, into range time/azimuth frequency domain (3.2);
   c) multiplying the received data by a frequency-scaling function(3.3)

$$H_1(f_a,t_r;r_o) = \exp\left[j\cdot 2\cdot\pi\cdot k_r \cdot \beta(f_a)\cdot t_r^2\right]\cdot\exp\left[j\cdot 2\pi\cdot\frac{\beta^2-1}{c_o^2\cdot\beta^3}\cdot r_o\cdot\lambda\cdot k_r^2\cdot\left(t_r-\frac{2\cdot r_{ref}}{c_o}\right)^2\right] \quad (5)$$

$$\beta(f_a)=\sqrt{1-\left(\frac{f_a\lambda}{2\,V}\right)^2}$$

   including a secondary range compression (3.4),
   d) transforming the data, via short range FFTs, into the two-dimensional frequency domain (3.5),
   e) multiplying the data by a residual-video-phase correction function (3.7)

$$H_{RVP}(f_r) = \exp\left[-j\cdot\pi\cdot\frac{f_r^2}{\beta\cdot k_r}\right] \quad (8)$$

   and subsequently
   f) transforming the data, via short range IFFTs, back into range time/azimuth frequency domain (3.8);
   g) multiplying the data formed in that way by the inverse frequency-scaling function (3.9)

$$H_y(f_a,t_r) = \exp\left[\pi\cdot k_r\cdot(\beta^2-\beta)\cdot t_r^2\right]\cdot\exp\left[j\cdot\frac{4\cdot\pi\cdot k_r}{c_o}\cdot r_{ref}\cdot(1-\beta)\cdot t_r\right] \quad (9)$$

   including a block shift;
   h) transforming the data, via long range FFTs, into two-dimensional frequency domain (3.11), and
   i) multiplying the data by the phase-correction function (3.13);

$$H_{korr}(f_a,f_r) = \exp\left[-j\cdot\frac{4\cdot\pi\cdot k_r}{c_o}\cdot\frac{2\cdot r_{ref}}{c_o}\cdot(1-\beta)\cdot\left(r_{ref}-\frac{f_r\cdot c_o}{2\cdot k_r}\right)\right] \quad (11)$$

   j) subsequently multiplying the data by an azimuth-scaling function (3.15)

$$H_a(f_a,f_r) = \exp\left[j\frac{4\cdot\pi}{\lambda}\cdot\left(r_{ref} - \frac{f_r\cdot c_o}{2\cdot k_r}\right)\cdot(\beta-1)\right]\cdot\exp\left[j\cdot\frac{\pi}{k_{a,scl}}\cdot f_a^2\right] \quad (12)$$

and subsequently transforming back the data, via short azimuth FFTs, into the range frequency/azimuth time domain (3,16);

1) subsequently re-assembling the azimuth sub-apertures (3.17) and multiplying the data by a de-ramping function (3.19),

$$H_{der}(t_a)=\exp[j\cdot\pi\cdot k_{a,scl}\cdot t_a^2]$$

and

m) transforming the data, via long azimuth FFTs, into the two-dimensional frequency domain (3.20),

wherein $f_a$ is the azimuth frequency, $t_r$ is the range time, $r_0$ is the shortest range to a target, $k_r$ is the modulation rate of the transmitted pulses in the range, $r_{ref}$ is the reference range, $f_r$ is the range frequency, $c_0$ is the speed of light, $\lambda$ is the wavelength, V is the speed, $t_a$ is the time in azimuth direction, $f_r$ is the range frequency and $k_{a,scl}$ is the scaling Doppler rate.

2. The use of a method according to claim 1 for two-dimensional processing of SONAR and seismic raw data with the spotlight and hybrid modes.

**Revendications**

1. Procédé pour le traitement bidimensionnel de données de radar à ouverture synthétique SAR du type spotlight, pour obtenir des données d'image précises, **caractérisé par** les étapes suivantes consistant en ce que

a) les données brutes du radar SAR de type spotlight sont réparties (3.1) dans des ouvertures secondaires en azimut, et

b) sont transformées (3.2) par de brèves transformations de Fourier rapides en azimut en étant amenées dans la gamme temps d'éloignement / fréquence en azimut;

c) les données obtenues sont multipliées (3.4) par une fonction de cadrage d'échelle de fréquence (3.3)

$$H_1(f_a,t_r;r_o) = \exp\left[j\cdot 2\cdot\pi\cdot k_r\cdot\beta(f_a)\cdot t_r^2\right]\cdot\exp\left[j\cdot 2\pi\cdot\frac{\beta^2-1}{c_o^2\cdot\beta^3}\cdot r_o\cdot\lambda\cdot k_r^2\cdot\left(t_r - \frac{2\cdot r_{ref}}{c_o}\right)^2\right] \quad (5)$$

$$\beta(f_a)=\sqrt{1-\left(\frac{f_a\lambda}{2\,V}\right)^2}$$

qui inclut une compression secondaire d'éloignement,

d) sont transformées (3.5) au moyen de brèves transformations de Fourier de l'éloignement, dans la gamme bidimensionnelle de fréquences,

e) sont multipliées (3.7) par une fonction de correction phase vidéo résiduelle

$$H_{RVP}(f_r) = \exp\left[-j\cdot\pi\cdot\frac{f_r^2}{\beta\cdot k_r}\right] \quad (8)$$

et ensuite

f) sont transformées de façon inverse, par de brèves transformations de Fourier rapides inverses de l'éloignement dans la gamme de temps d'éloignement / de fréquence en azimut;

g) les données ainsi formées sont multipliées par la fonction de cadrage d'échelle de fréquence inverse (3.9)

$$H_g(f_a, t_r) = exp\left[\pi \cdot k_r \cdot (\beta^2 - \beta) \cdot t_r^2\right] \cdot exp\left[j \cdot \frac{4 \cdot \pi \cdot k_r}{c_o} \cdot r_{ref} \cdot (1 - \beta) \cdot t_r\right] \quad (9)$$

qui inclut un décalage de blocs,

h) ensuite sont à nouveau transformées (3.11), au moyen d'une longue transformation de Fourier rapide de l'éloignement, pour être amenées dans la gamme bidimensionnelle des fréquences, et

i) sont multipliées (3.13) par la fonction de correction de phase

$$H_{korr}(f_a, f_r) = exp\left[-j \cdot \frac{4 \cdot \pi \cdot k_r}{c_o} \cdot \frac{2 \cdot r_{ref}}{c_o} \cdot (1 - \beta) \cdot \left(r_{ref} - \frac{f_r \cdot c_o}{2 \cdot k_r}\right)\right] \quad (11)$$

j) ensuite sont multipliées (3.15) par la fonction de cadrage d'échelle en azimut

$$H_a(f_a, f_r) = exp\left[j\frac{4 \cdot \pi}{\lambda} \cdot \left(r_{ref} - \frac{f_r \cdot c_o}{2 \cdot k_r}\right) \cdot (\beta - 1)\right] \cdot exp\left[j \cdot \frac{\pi}{k_{a,scl}} \cdot f_a^2\right] \quad (12)$$

et ensuite sont transformées à nouveau en retour (3.7) par de courtes transformation de Fourier rapides en azimut, pour être amenées dans la gamme des fréquences d'éloignement / de temps en azimut;

1) ensuite les sous-ouvertures en azimut sont à nouveau rassemblées (3.17) et sont multipliées (3.19) par une fonction de deramping

$$H_{der}(t_a) = exp[j \cdot \pi \cdot k_{a,scl} \cdot t_a^2]$$

et

m) sont ensuite transformées (3.20) par de longues transformations de Fourier rapide en azimut pour être amenées dans la gamme bidimensionnelle des fréquences,

$f_a$ étant la fréquence en azimut, $t_r$ le temps d'éloignement, $r_o$ l'éloignement le plus court d'une cible, $k_r$ la vitesse de modulation des impulsions émises en éloignement, $f_{ref}$ l'éloignement de référence, $f_x$ la fréquence d'éloignement, $f_o$ la vitesse de la lumière, $\lambda$ la longueur d'onde, V la vitesse, $t_a$ le temps dans la direction de l'azimut, $f_r$ la fréquence d'éloignement et $k_{a,scl}$ la vitesse Doppler de cadrage d'échelle.

2. Procédé d'utilisation selon la revendication 1 pour le traitement bidimensionnel de données brutes d'un SONR et de données brutes sismiques avec spotlight et dans le mode hybride.

# Fig.1

Spotlight Rohdaten — 3.1

Aufteilung in Subaperturen

Kurze Azimut FFT

3.2

3.4 ⊗ ← Frequenz-Skalierung mit sekundärer Entfernungs-Kompression — 3.3

Kurze Entfernungs FFT

3.5

3.7 ⊗ ← RVP Korrektur — 3.6

Kurze Entfernungs IFFT

3.8

3.10 ⊗ ← Inverse Freq.-Skalierung mit Block_Verschiebung — 3.9

Lange Entfernungs FFT

3.11 — 3.12

3.13 ⊗ ← Phasen Korrektur

3.15 ⊗ ← Azimut-Skalierung — 3.14

3.16

Kurze Azimut IFFT

Zusammenfügen der Subaperturen — 3.17

3.18

3.19 ⊗ ← Deramping

3.20

Lange Azimut FFT

Prozessiertes Bild

**Fig.2**

**Fig.3**

## Fig.4

## Fig.5

## Fig.6a

Ziel Fernbereich vor Frequenz Skalierung

## Fig.6b

Ziel Fernbereich nach Frequenz Skalierung

## Fig.6c

Ziel bei Referenzentfernung vor Frequenz Skalierung

## Fig.6d

Ziel bei Referenzentfernung nach Frequenz Skalierung

## Fig.6e

Ziel Nahbereich vor Frequenz Skalierung

## Fig.6f

Ziel Nahbereich nach Frequenz Skalierung

Fig.7

Azimut

Spotlight Apertur

SAR
Apertur

Szenenzentrum

Entfernung

Fig.8